# EUROPEAN PATENT APPLICATION

(11) **EP 3 385 890 A2**
(43) Date of publication of application: **10.10.2018**
(21) Application number: 16872463.1
(22) Date of filing: 25.11.2016
(51) Int. Cl.: G06Q 10/00, B60R 19/48, G08G 1/16, H04N 7/18

(54) **SYSTEM AND METHOD FOR DETECTING AND ANALYSING IMPACTS IN MOTOR VEHICLE RACES**

(30) Priority: 02.12.2015 ES 201531755
(71) Applicant: Pixel Ingeniería, S.L., 12539 Alquerias Del NP (Castellón) (ES); Geidel, James Alexander, 12540 Vila-Real (Castellón de la Plana) (ES)
(72) Inventor: GEIDEL, James Alexander, 12540 Vila-Real (Castellón de la Plana) (ES); LLOP PLA, Héctor, 12539 Alquerias del NP (Castellón) (ES)
(86) International application number: PCT/ES2016/070842
(87) International publication number: WO 2017/098068

(57) **Abstract**

The invention relates to a system and method for the detection and analysis of impacts in motor vehicle races, mainly kart racing, which comprises three interrelated subsystems: a first subsystem for identifying, using a unique identification number, the cart involved in the contact, unequivocally establishing when and, optionally, where the contact occurred, the subsystem acting by means of sensors (2) and optionally GPS (4) and sending said data from the vehicle/kart (A) by means of a control box (1) comprising an electronic circuit (3) for conditioning and measuring the signals received by the sensors, a microcontroller (6) and a wireless emitter module (5) that links to a second subsystem; a second subsystem comprising a wireless receiver modem (7) with a corresponding microprocessor (8) that receives the information, the information being read by a computer program (9) for the storage and subsequent processing thereof; and a third subsystem comprising management software (10) that links the information received by the second subsystem to the data captured by the first subsystem, using video recordings captured by cameras (C) on the circuit (B).

## Description

### Subject matter of the Invention

The present invention refers to a system and method for the detection and analysis of impacts in motor vehicle races, mainly in the karting modality, which by its conformation, characteristics and applications, improves the mechanisms and/or systems existing in the market and everything that is part of the relevant state of the art.

This system, which is understood as a detection and analysis method or procedure applied to vehicle racing activities and in particular kart vehicles, comprises three subsystems that include a set of technical tools implemented on a base of computer supports that can detect a physical contact between two running karts, identify such vehicles, determine exactly at what point of the track and at what time has the impact or physical contact with another vehicle taken place, transmit this information to a computer management and storage program and relate everything, through a specific software, with an image recording system installed in the competition circuit. The data is captured and transmitted from the vehicle/kart itself.

### Prior art

One of the sporting activities that has had and has a great expansion are motor vehicle competitions, whether internal combustion or electric, be it two, three, four or more wheels and in various professional and amateur categories. Likewise, schools and learning centers and circuits with different routes have proliferated where the user can run with his/her own car or motorcycle or rent karts or other specialized vehicles.

In many occasions, the user seeks the experience of driving cars and motorcycles in professional circuits, emulating Formula 1, Formula E or MotoGP drivers but in others, especially in learning centers, the objective is to train in driving techniques to participate in competitions, firstly of an amateur nature, as prior experience to official competitions.

This learning should not only refer to technical aspects such as mechanics, strategies, skill and reflexes, etc. but to the behavior of the pilot with respect to other vehicles and pilots, always prioritizing safety and correctness in form and substance in a sport that implies a risk that must be considered.

One of the behaviors that tends to reproduce in the learning or practice races, especially in the karting mode, is to hit deliberately other vehicles in order to obtain some benefit. Obviously, this behavior is unsportsmanlike and is punished by the organizers of the race.

And it is at this point that the problem arises. The races take place on tracks with different routes and lengths, sometimes reaching 1500 meters, which implies the need to have strategically placed personnel in order to supervise and/or assist the karts or have tools or means that can control the possible contact between vehicles during the race. This last aspect is usually limited to video recordings that allow to review the race and subsequently detect contacts and impacts between vehicles but, naturally, this control is not practical during the race.

Precisely, the length and layout of the tracks and the high number of karts participating in the race make the tracking of incidents very complicated, especially in the karts far from the first positions, where logically there is greater competitiveness for the win and a more attention from the track judges, while in the middle or last zone of the race, the karts run with more scattered attention.

And another matter to consider is that the race manager's notes can be questioned by the riders since the race sets are very fast and it is not always easy to determine the intentions of the drivers. For example, a hit to the preceding kart can be accidental or intentional and it is very complex to establish one possibility or another.

One solution is to resort to the aforementioned video recordings or incorporating more track judges who control the race, but this involves a considerable economic cost and the difficulty of having experienced and impartial people to control the tests, in addition to falling back on the issue of impartiality and interpretation of the incidents.

At the level of industrial property, there are several patents that affect the development of technical solutions related to safety measures for motor vehicles, some of which refer to vehicles that participate in competitions. This is the case of the French patent FR3008944, which presents a system that includes a variety of sensors that collect various parameters of dynamic behavior of vehicles, i.e. detected values that may involve a risk, such as excessive deceleration in case of shock as well as physical conditions of the circuit (temperature, rain, visibility). Also, patent PCT WO2007009225 develops a method especially intended for viewers who follow a race in the circuit so that they can select and display certain sequences of interest recorded by the existing cameras in the circuits through portable terminals. The patent P201331428 relates to a device, system and method of identifying a vehicle colliding with another parked vehicle, which includes a controller, a wireless communication module and an impact detector (5), all intended to detect an impact in a vehicle that is parked and to store collision data that include at least the identification of the vehicle. It does not have, therefore, relation nor application in competitions of vehicles, limiting itself to act like a sort of security element for parked vehicles that can be affected by other vehicles in movement.

These and other proposals offer technical solutions that can be functional for the situations described but that in no way offer a real and effective solution to help in the learning of drivers of motor vehicles and karts in particular, both at the level of driving and of behavior on the track, detecting deliberate actions like blows and physical contacts between karts, with the risk that this entails.

For their part, the applicants are not aware that any technical solution has been developed that includes a response to the need to have a system that allows on-site and real-time monitoring of incidents, specifically hits, that may occur in a race and that in turn allows the head of the race, acting as track judge, to communicate the incident to the pilot, sanctioning or penalizing the participants who have inappropriate behavior on the track.

### Object of the invention

Thus, this invention patent develops a system and method for the detection and analysis of collisions in motor vehicle races, mainly in the karting mode, which provides an operational and functional solution to the problems described.

This system contemplates three main subsystems in which certain modules participate and a novel software is implemented that allows the interrelation of the three subsystems.

The objective is to immediately detect any contact or hit between two vehicles, especially karts, that occurs during a race, identify the kart involved with a unique identification number, establish unequivocally when and, optionally, where the contact has been produced and all the reference data collected, sending this data from the same kart to a receiving modem, so that this information is processed and managed by a computer program to subsequently work with a software capable of relating it to the recordings of the images captured by the video cameras normally installed in the track circuit, analyzing the images during the moments before and after the detection of the impact so as to determine its nature.

With this, it is possible to have enough data to manage any incident that occurred on the track, correct errors committed, punish the behavior of pilots, etc., without the slightest doubt about the veracity of the data collected or questioning the hypothetical partiality or error of the race head, track judges or even the coach of the pilot in case of learning.

The first subsystem comprises an electronic device that mainly has one or more sensors installed in the bumpers or another point of each vehicle/kart, which detect collisions, contacts or impacts that this vehicle/kart may receive during the competition, such sensors being of the type that reacts with physical contact between two vehicles and linked with a control box that integrates the means to collect the data of the aforementioned sensors and that allows the connection by means of a transmitter module with the second subsystem, all of it managed by a microcontroller.

Another possible embodiment, preferably indicated as a means of prevention before the impact, is a proximity sensor, for example acting by means of a wave emitter which, when bouncing on another kart, sends a signal to the control center, this type of sensor being functional to avoid a contact or hit.

This device is capable of incorporating a GPS module or chip to determine the position in the track where the impact has occurred and consequently have data to quickly access the camera that covers that area of the circuit, data which is integrated into the package that is sent to the second subsystem.

In any case, said electronic device has a unique identifier unequivocally associated with the number of the vehicle in which it is installed. Each time this electronic device detects, through the sensor or corresponding sensors, a contact with another kart or with any obstacle, it sends through its transmitter module to the second subsystem a wireless signal that contains its unique identification code and additionally the GPS coordinates of the position where the vehicle is located.

In a second embodiment, the first subsystem comprises an optical and/or sound indicator located preferably in the control panel or at a proximal point, fixed in the vehicle and visually accessible to the pilot, which is connected wirelessly to the sensor module, which, when activated by the impact, triggers the indicator in turn, alerting the pilot of the impact. This indicator is especially relevant when it comes to minor frictions that may go unnoticed by the driver while driving but must be taken into consideration to avoid new contacts and risks.

The second subsystem comprises a wireless receiver modem, connected wirelessly with the emitter module of the first subsystem. This wireless receiver modem with its corresponding microprocessor transfers the received information to a programmable computer program, associated with a fixed or mobile computer terminal, which stores, processes and manages the information, in particular the reception time (which corresponds to the time at which the physical contact occurred, since communication is immediate), the possible information on the position of the vehicle at the moment of the impact and of course the code associated to the vehicle, so the incident/impact is recorded automatically and without any explicit intervention (voluntary or involuntary) of any person. This computer program, through an application, allows dumping information for the preparation of tables, statistics and any analysis considered necessary.

The third subsystem is embodied in a management software, installed in a computer terminal, fixed or mobile, which may be the same or different from the one supporting the second subsystem. This management software links the information managed and analyzed by the second subsystem with the video recordings captured by the existing cameras in the track, so that the race manager/track judge can, either automatically or manually, review the images of the previous and subsequent moments of the impact, verify exactly which vehicle is involved and assess the nature of the collision, allowing where appropriate, to determine possible penalties for unsportsmanlike behavior.

The relationship between the second subsystem and the third subsystem, that is, the use of the information obtained and collected by the first subsystem and later analyzed and managed by the second subsystem, is susceptible of being carried out in two ways.

In the first one, the user, with the exact information managed by the second subsystem -vehicle/kart involved in the collision recognized by its unique identification number, moment of the impact and point of the track (optional)- accesses the recording software of the track camera system to search deliberately (it has the data collected), but manually, for the appropriate recording. In this embodiment, there is no connection whatsoever between the computer program of the second subsystem and the management software of the track cameras.

In the second one, a proprietary software is created that manages the cameras and their recordings where the information of the second subsystem is integrated, so that direct access to the information is opened and direct communication is established between the software of the second and third subsystems. As an example, the software of the third subsystem can access a list of the impacts detected by vehicle XXX, click on a specific one and access the correct camera recording at the point and time of the impact, even with the possibility of rewinding and viewing the images for a period of time prior to the impact. This involves a great advantage in the learning of the pilots since it allows to detect if there was a previous driving error that caused the excessive approach that culminates in the impact with another vehicle.

Therefore, it can be concluded that the system and method claimed require at least two software or computer programs, one in the second subsystem for the storage and management of the data collected by the first subsystem and another one for the management of existing cameras in the track.

In one embodiment, both software or computer programs are connected to each other. In another embodiment, both software or computer programs are not connected together.

Both computer programs or software require a computer terminal, which can be the same, i.e. shared, or different terminals.

Based on the foregoing, the method for the detection and analysis of bumps in motor vehicle races, mainly karting, therefore comprises the following stages:
a) The contact sensor or sensors of the first subsystem are triggered by direct contact (impact) suffered by the vehicle/kart, either with another vehicle/kart or other obstacle.
b) If integrated in the control box, the GPS module captures the location of the vehicle/kart position at the moment of the bump.
c) The control box receives the signals from the sensor and, optionally, from the GPS module and manages and processes them using the microcontroller.
d) The sending module conveys to the second subsystem a wireless signal containing the unique identification number of the control box unambiguously associated with the vehicle/kart number in which it is installed and the information processed by the first system.
e) The second subsystem, through the wireless receiver modem, receives the information and, through the microprocessor, stores it, analyzes it and manages it in the computer program associated with a computer terminal, fixed or mobile.
f) The information captured by the first subsystem and managed by the second subsystem is applied or used by the third subsystem, in which
   a. the management software of the third subsystem is integrated into its own software together with the computer program of the second subsystem, directly and automatically accessing the information already analyzed and managed and relating it to the video recordings captured by the existing cameras in the track
      or
   b. the management software of the third subsystem accesses the video recordings captured by the existing cameras in the track manually based on information already analyzed and managed by the second subsystem.

In summary, the system and method or procedure claimed comprises three subsystems that interact with each other and that have the corresponding technical and/or computer means. The first subsystem consists of the detection of physical contact or impact, identification with a unique identification number of the vehicle involved thanks to the integrated reference in the electronic device installed in the vehicle/kart and other reference data, in particular when and, optionally, where the contact has occurred thanks to the GPS module. The second subsystem consists of the reception of the wireless signal sent by the wireless transmitter module of the first subsystem that contains the data generated by said first subsystem, which it manages and analyzes by means of a computer program. The third subsystem consists of the interrelation of the information collected in the first subsystem and received and managed in the second subsystem with the images of the recordings captured in the track.

Additionally, the first subsystem acts both on the vehicle actively involved in the contact, i.e. the hitting vehicle, as well as on the passively involved vehicle, i.e. the vehicle receiving the impact, such that said first subsystem, logically installed in each of the vehicles participating in the race, sends the relevant information to the second subsystem, including the contact zone or position of the blow (front/rear/left/right). In this way, the second subsystem receives and manages the data received from the first subsystem of both vehicles, which allows, based on the data collected, to detect the coincidence of the impact in time and to relate the vehicles involved, even elaborating the sequence of the contacts/impacts when there is a concatenation of the same involving more than two vehicles, so an objective and contrasted evidence of what happened in the track is obtained, for example, which vehicle hit in the first place to which other vehicle, if there was a "rebound" effect with other vehicles from the first or the second vehicle, which part of each vehicle received the contact/impact, how each vehicle reacted to the blow, if it absorbed it, if its trajectory varied, if directional control was maintained, etc.

### Description of the drawings

In order to facilitate the understanding of the innovation claimed here, some sheets with drawings are attached, which must be analyzed and considered only by way of example and without any limiting or restrictive character.
Figure 1.- Schematic view of a kart with reference to the sensors installed and the control box that includes the transmitter module.
Figure 2.- Schematic view of a track with detail of recording cameras.
Figure 3.- Schematic view of the implementation of the three subsystems.

### Preferred embodiment of the invention

According to these drawings, the object of this invention patent is a system and method for the detection and analysis of impacts in motor vehicle races, mainly karting vehicles, in which three main subsystems participate: a first subsystem embodied in an electronic device installed in the vehicle connected with at least one contact sensor and comprising a control box with a unique identifier number associated with the vehicle and with means to manage and send the information collected, including, optionally, the data of a GPS module; a second subsystem, with a wireless receiver modem, its corresponding management microprocessor and a programmable computer program associated with a computer terminal; a third subsystem comprising a management software that links the information received by the second subsystem with the video recordings of the cameras existing in the track.

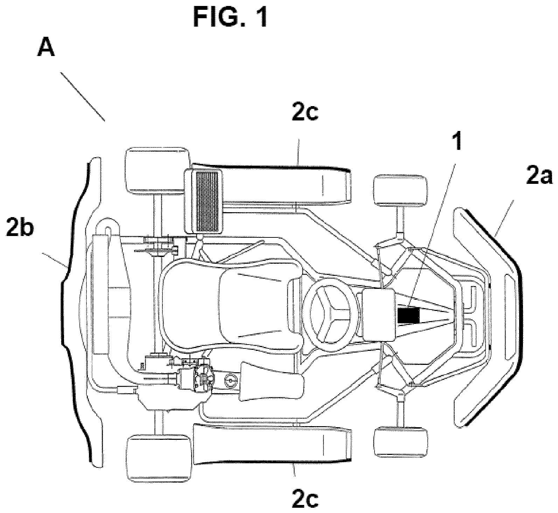

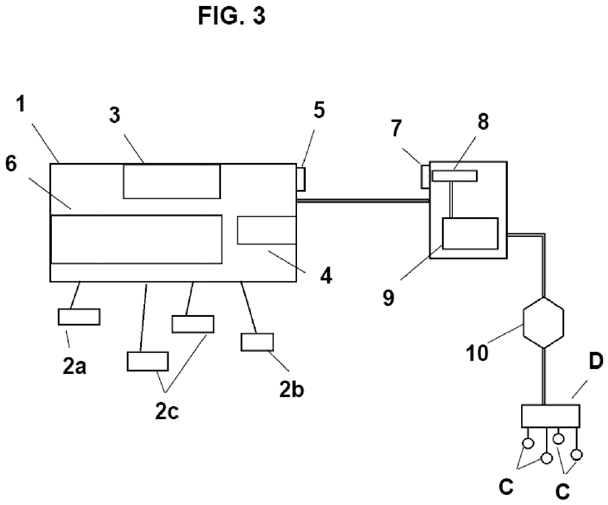

Figure 1 shows a schematic view of a vehicle (A), in this embodiment example of the kart type, with various sensors (2a) (2b) (2c) installed both in the front and in the back and in the lateral parts, located in points of the structure of the kart which protrude sufficiently to be contact areas with other karts. The electronic device that controls the first subsystem is also housed in the kart, in a convenient area, and which is embodied in a control box (1) connected to the sensors and which comprises other elements that will be described based on Figure 3.

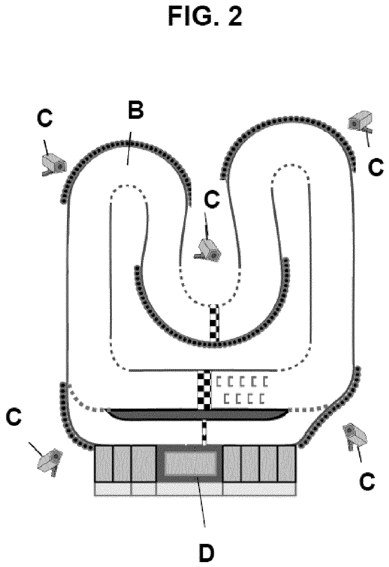

Figure 2 shows, only by way of example, a schematic view of a kart track (B), showing the presence of a series of cameras (C) strategically arranged to capture the race and karts that participate; said cameras (C) are commanded and supervised from the control area (D). The course of the track is perfectly modifiable.

Figure 3 shows a diagram detailing the operation and implementation of the three subsystems that make up the system for the detection and analysis of impacts in motor vehicle races, in particular karts, which is claimed.

The first subsystem comprises an electronic device installed directly on each vehicle/kart (A) (it is the only one of the subsystems that is) and linked to it unequivocally by means of a unique identification code. This device comprises at least one sensor (2) capable of detecting the contact between two vehicles/karts (A), in particular a pressure sensor that allows to measure the magnitude of the impacts in terms of force, such sensor having such sensitivity and robustness that allows to detect contact between two vehicles/karts (A) with a range of forces between 0.5 Newton and 200 Newtons, suitably solid to withstand impacts without breaking and reliable to not offer false detections.

This sensor or sensors (2a) (2b) (2c) are connected to a control box (1) conveniently installed in the vehicle/kart (A), which comprises an electronic circuit (3) for conditioning and measuring the signals received by the sensors, optionally a GPS module (4) for determining the position of the vehicle on the track, a wireless transmitter module (5) for the transmission of information to the outside and a microcontroller (6) for the management and processing of the signals from the sensors, communication with the GPS module to receive the position information and sending to the wireless sender module (5) the data collected, for external wireless transmission.

The second subsystem comprises a wireless receiver modem (7) with its corresponding microprocessor (8) for the conditioning and reception of the wireless signals emitted by the emitter module (5) of the first subsystem with the data collected and processed by the microcontroller (6) of the electronic device installed in the vehicle (A) and its transmission to a computer program (9) for its storage and subsequent processing, that is installed in a computer terminal, fixed or mobile, connected in turn to the aforementioned wireless receiver modem (7).

This computer program comprises the following functional blocks:
- Database that stores the information received from the devices of the vehicles/karts and saves the exact moment when the information is received in order to synchronize with the camera system (C).
- Logic for the assignment of the unique identifier of the vehicle/kart device (A) to the number assigned in the competition (its visible number to the stewards).
- Logic for the management of the different races included in each competition and the participants in each race for quick access to the list of impacts.

The third subsystem comprises a management software (10) that allows quick access to the recordings at the time that a particular impact has occurred and, if GPS information of the location of the vehicle/kart (A) is available at the moment of the contact, one can directly visualize the image from the camera (C) that records the specific area of the track (B) where the contact between vehicles/karts has occurred (A); said camera or cameras (C) being supervised from the control point or zone (D). In this way, this management software (10) links the data captured by the first subsystem, received via wireless, processed and managed by the second subsystem with the video recordings captured by the cameras (C) existing in the track (B). This management software (10) of the cameras (C) is capable of being used manually, that is, the user seeks specifically the moment of contact between the vehicles/karts (A) from among the information obtained by the first subsystem and managed by the second subsystem, or by linking this management software (10) of the third subsystem with the computer program (9) of the second subsystem with direct communication, so access to the data remains open.

Based on the foregoing, it should be noted that the system and method for the detection and analysis of impacts in motor vehicle races, particularly karts, implies significant advantages to control the development of the races and the incidents derived from direct contact between vehicles, in particular the aforementioned karts, or with other obstacles existing in the circuit track.

The joint operation of the three subsystems, that is, the emitter module with at least one contact sensor and optional GPS module, the receiving modem with the information storage and processing software and the management software with video recordings, is performed automatically in subsystems 1 and 2, and automatically or manually in relation to subsystem 3, in which the race director / track judge finds all the information before and after the contact to verify the incident, also allowing to review with the pilot(s) involved the whole sequence in order to avoid it in other races.

It is evident that this system and method provides objective data on which vehicle/kart has hit another, when and where the event occurred. There is no place for denying or arguing that it is a subjective interpretation.

In case of incidents or claims, it allows quick access to the images that give direct witness, visualizing the precise moment of the impact for analysis, thus checking the circumstances prior to the incident.

It also allows a possible automatic analysis of the images recorded by artificial vision for the automatic determination of penalties.

And the presence of an indicator accessible to the pilot allows him to be immediately aware of the impact.

And logically, if the direct contact/impact is intentional, the mere existence of the system and method described, which provides proof and real evidence of the fact, entails a deterrent effect in future competitions.

As for the technical modules that intervene in the system and method, they are easily installable, affordable and highly reliable.

The software that participates in the system and method is susceptible to be managed by the track manager / user track judge through systems such as Bluetooth, via radio, App, etc. in different computer terminals.

Finally, note that the system and method claimed to detect and analyze impacts can be applied in competitions of different categories of motor vehicles, in internal combustion or electric vehicles, in vehicles of two, three, four or more wheels, although, as has been pointed out throughout this descriptive document, its most logical application is that which refers to karts, which, due to their own constructive nature and the characteristics of the competition and track, are prone to collide or be involved in incidents such as impacts or contacts referred to by this system and method, either incidentally or accidentally, due to driving errors that must be corrected or intentionally, which must be recognized as such and sanctioned if this is the case considered.

It is not considered necessary to make this description more extensive so that any expert in the field understands the scope of the invention and the advantages derived therefrom. The materials, shape, size and arrangement of the elements will be susceptible to variation as long as this does not entail an alteration in the essence of the invention. The terms with which this report has been written should always be taken in a broad and non-limiting sense.

## Claims

1. System for the detection and analysis of impacts in races of motor vehicles (A), mainly karting, where the circuit track (B) has cameras (C) recording images monitored from a control point or area (D) and where sensors (2), wireless emission module (5) and wireless reception modem (7) are involved, essentially **characterized in that** it comprises three subsystems that interact with each other, wherein the first consists in the identification of the vehicle involved by means of a unique identification number, detection of physical contact or impact and when and optionally where it has occurred, where the second consists of the storage, processing and management by means of a computer program of the data generated by the first subsystem and received by wireless means and where the third consists of the interrelation of the information received in the second subsystem with the images of the recordings captured in the track (B), each subsystem comprising the corresponding technical and/or computer means.

2. System for the detection and analysis of impacts in motor vehicle races, according to claim 1, characterized essentially because the first subsystem is embodied in an electronic device installed directly in the vehicle (A), this device comprising at least one sensor (2a) (2b) (2c) able to detect contact between two vehicles (A), this sensor or sensors (2a) (2b) (2c) being installed in at least one point of the rear, front or side of the vehicle, said sensor or sensors being connected to a control box (1) conveniently installed in the vehicle (A), which has a unique identification code unequivocally associated with the vehicle number (A) in which it is installed.

3. System for the detection and analysis of impacts in motor vehicle races, according to the 2nd claim, essentially **characterized in that** the sensor is of the type that reacts with physical contact between the two vehicles, measuring the magnitude of the contacts in terms of force, with a range between 0.5 Newton and 200 Newtons.

4. System for the detection and analysis of impacts in motor vehicle races, according to the 2nd claim, characterized essentially because the sensor is for proximity, of the type that includes an emitter of waves that bounce off nearby vehicles.

5. System for the detection and analysis of impacts in motor vehicle races, according to the 3rd or 4th claims, essentially **characterized in that** it comprises an optical and/or sound indicator inserted preferably in the control panel or in a proximal point, fixed in the vehicle and connected wirelessly with the sensor(s).

6. System for the detection and analysis of impacts in motor vehicle races, according to the 2nd claim, characterized essentially because the control box (1) comprises an electronic circuit (3) for conditioning and measuring the signals received by the sensors (2), a wireless emitter module (5) and a microcontroller (6).

7. System for the detection and analysis of impacts in motor vehicle races, according to the 2nd claim, characterized essentially by the fact that the control box (1) comprises a GPS module (4).

8. System for the detection and analysis of impacts in motor vehicle races, according to the 6th claim, essentially **characterized in that** the second subsystem comprises a computer program (9) that receives the data collected and processed by the first subsystem by means of a wireless receiver modem (7) with its corresponding microprocessor (8) connected wirelessly to the transmitter module (5) of the first subsystem, said computer program (9) being installed in a computer terminal, fixed or mobile, connected in turn to the wireless receiver modem (7).

9. System for the detection and analysis of impacts in motor vehicle races, according to the 8th claim, essentially **characterized in that** the computer program (9) comprises the following functional blocks:
- Database for storage of received information and synchronization with the camera system (C).
- Logic for the assignment of the unique identifier of the vehicle device to the number assigned in the competition.
- Logic for the management of different races.

10. System for the detection and analysis of impacts in motor vehicle races, according to claim 1, characterized essentially because the third subsystem comprises a management software (10) that links the data captured by the first subsystem and processed and managed by the second subsystem with the video recordings captured by the cameras (C) existing in the track (B), this computer program (9) being installed in a computer terminal, fixed or mobile.

11. System for the detection and analysis of impacts in motor vehicle races, according to the 8th and 10th claims, essentially **characterized in that** the management software (10) of the third subsystem and the computer program (9) of the second subsystem are integrated in a proprietary software, opening a direct access to the information of the second and third subsystems.

12. System for the detection and analysis of impacts in motor vehicle races, according to the 8th and 10th claims, essentially **characterized in that** the management software (10) of the third subsystem and the computer program (9) of the second subsystem are installed in the same computer terminal, fixed or mobile.

13. System for the detection and analysis of impacts in motor vehicle races, according to the 1st, 2nd and 8th claims, essentially **characterized in that** the first subsystem acts both on the vehicle actively involved in the contact, that is, the hitting vehicle, and in the vehicle passively involved, that is, the vehicle receiving the impact, sending each first subsystem to the second subsystem the relevant information, including the contact zone or position of the blow (front/rear/left/right), so that the second subsystem receives and manages the data received from the first subsystem of both vehicles, detecting, from the data collected, the coincidence of the impact in time, relating the vehicles involved and elaborating the sequence of the contacts/impacts when there is a concatenation of these that involve more than two vehicles.

14. Method for the detection and analysis of impacts in motor vehicle races, according to the previous claims, characterized essentially because it comprises the following stages:
a) Triggering of the contact sensor (2) of the first subsystem with the direct contact (impact) suffered by the vehicle/kart.
b) Triggering of the GPS module (4), if integrated in the control box (1), capturing the location of the vehicle/kart at the moment of the impact.
c) Receiving the signals from the sensor (2) and, optionally, from the GPS module (4) in the control box (1), which proceeds to its management and processing by means of the microcontroller (6).
d) Triggering of the transmitter module (5) to send to the second subsystem a wireless signal containing the unique identification number of the control box (1) unequivocally associated with the number of the vehicle in which it is installed and the information processed by the first subsystem.
e) Activation of the wireless receiver modem (7) of the second subsystem for receiving the information processed by the first system and, through the microprocessor (8), storage, analysis and management of the same in the computer program (9) associated with a terminal computer.
f) Application or use of the information captured by the first subsystem and managed by the second subsystem through the third subsystem, in which
a. the management software (10) of the third subsystem is integrated into its own software together with the computer program (9) of the second subsystem, directly and automatically accessing the information already analyzed and managed and relating it to the video recordings captured by the cameras (C) existing in the track (B)
or
b. the management software (10) of the third subsystem accesses the video recordings captured by the cameras (C) existing in the track (B), manually, based on information already analyzed and managed by the second subsystem.
